# EUROPEAN PATENT APPLICATION

(11) **EP 4 518 293 A1**
(43) Date of publication of application: **05.03.2025**
(21) Application number: 23794892.2
(22) Date of filing: 24.03.2023
(51) Int. Cl.: H04L 67/2866, H04W 24/02

(54) **HOST NETWORK DEVICE IDENTIFICATION METHOD, APPARATUS AND STORAGE MEDIUM**

(30) Priority: 24.04.2022 CN 202210435051
(71) Applicant: Datang Mobile Communications Equipment Co., Ltd., Beijing 100085 (CN)
(72) Inventor: LI, Xiaojiao, Beijing 100085 (CN); WANG, Junwei, Beijing 100085 (CN)
(74) Representative: Studio Torta S.p.A.
(86) International application number: PCT/CN2023/083691
(87) International publication number: WO 2023/207457

(57) **Abstract**

Provided in the embodiments of the present disclosure are a host network device identification method, an apparatus and a storage medium. The method comprises: acquiring a system message sent by a network device, the system message comprising configuration information; or acquiring an SCI message sent by the network device, the SCI message comprising configuration information; or acquiring configuration information of OAM configuration, the configuration information comprising identification information and/or frequency point information of the network device, wherein the configuration information is used for indicating the device type of the network device and/or the type of a network device-accessing repeater, and the device type of the network device comprises a host network device type and a non-host network device type. In the present disclosure, by acquiring the configuration information for indicating the device type of the network device and/or the type of the network device-accessing repeater, the host network device can be quickly identified and accessed after internet access, so that the processing capability requirement on the repeater and the manufacturing cost of the repeater are reduced.

## Description

### CROSS-REFERENCES TO RELATED APPLICATIONS

The present application claims priority to Chinese application No. 202210435051.1 filed on April 24, 2022, entitled "Host Network Device Identification Method, Apparatus and Storage Medium", which is hereby incorporated by reference in its entirety.

### FIELD

The present application relates to the field of communications, and in particular, to methods and apparatuses for identifying a network-control repeater-Support (ncr-Support) network device, and a storage medium.

### BACKGROUND

A smart repeater is different from a traditional repeater in that a network-control repeater-Support (ncr-Support) network device provides a special interface protocol for sidelink control information (SCI) of the repeater.

In case that a repeater is deployed, the repeater needs to identify a ncr-Support network device that supports an SCI interface function. Correspondingly, the ncr-Support network device also needs to identify the repeater in order to provide SCI to the repeater.

In the related art, there is no technology for the repeater to identify the ncr-Support network device. If the repeater identifies the ncr-Support network device based on a currently available solution of a terminal identifying the network device, high processing capacity of the repeater is required.

### BRIEF SUMMARY

In view of problems in related art, embodiments of the present application provide methods and apparatuses for identifying a network-control repeater-Support (ncr-Support) network device and a storage medium.

An embodiment of the present application provides a method for identifying a network-control repeater-Support (ncr-Support) network device, including:
obtaining a system message transmitted from a network device, where the system message includes configuration information; or
obtaining a sidelink control information (SCI) message transmitted from a network device, where the SCI message includes configuration information; or
obtaining configuration information configured by operation administration and maintenance (OAM), where the configuration information includes identity information of a network device and/or frequency information,
where the configuration information is used for indicating a device type of the network device and/or a type of a repeater that the network device accesses, and the device type of the network device includes a ncr-Support network device type and a non-ncr-Support network device type.

In an embodiment, the system message is a master information block (MIB) message, and a system information block type 1 (SIB-1) configuration parameter in a first bit field of the MIB message is used for indicating the device type of the network device and/or the type of a repeater that the network device accesses.

In an embodiment, the system message is a system information block type 1 (SIB-1) message transmitted on a physical downlink shared channel (PDSCH) indicated by downlink control information (DCI) in a first physical downlink control channel (PDCCH), where the first PDCCH is a PDCCH scrambled by a system information radio network temporary identifier (SI-RNTI) specific for identifying the repeater that the network device accesses.

In an embodiment, obtaining the system message transmitted from the network device includes:
obtaining a first system message transmitted from the network device, where the first system message is used for indicating the device type of the network device; and
obtaining a second system message transmitted from the network device for identifying the repeater that the network device accesses in case that the device type of the network device is the ncr-Support network device type.

In an embodiment, the first system message is a MIB message common to a ncr-Support network device and a non-ncr-Support network device, the second system message is a SIB-1 message transmitted on the PDSCH indicated by DCI in a first PDCCH, and the first PDCCH is a PDCCH scrambled by a SI-RNTI specific for identifying the repeater that the network device accesses.

In an embodiment, the SCI message is carried by a first PDCCH, and the first PDCCH is a PDCCH scrambled by a SI-RNTI specific for identifying the repeater that the network device accesses.

In an embodiment, the SCI message indicates the device type of the network device and/or the type of the repeater that the network device accesses through a second bit field.

In an embodiment, the method further includes:
detecting a ncr-Support network device based on the configuration information; and
in case that multiple ncr-Support network devices are detected, accessing a ncr-Support network device satisfying a predetermined condition among the multiple ncr-Support network devices; or
in case that no ncr-Support network device is detected, obtaining configuration information on another frequency other than the frequency where the configuration information is located.

An embodiment of the present application further provides a method for identifying a network-control repeater-Support (ncr-Support) network device, including:
transmitting a system message to a repeater, where the system message includes configuration information; or
transmitting a sidelink control information (SCI) message to a repeater, where the SCI message includes configuration information,
where the configuration information is used for indicating a device type of the network device and/or a type of a repeater that the network device accesses, and the device type of the network device includes a ncr-Support network device type and a non-ncr-Support network device type.

In an embodiment, the system message indicates the device type of the network device and/or the type of the repeater that the network device accesses through a first bit field.

In an embodiment, the system message is a master information block (MIB) message, and a system information block type 1 (SIB-1) configuration parameter in a first bit field of the MIB message is used for indicating the device type of the network device and/or the type of a repeater that the network device accesses.

In an embodiment, the system message is a system information block type 1 (SIB-1) message transmitted on a physical downlink shared channel (PDSCH) indicated by downlink control information (DCI) in a first physical downlink control channel (PDCCH), where the first PDCCH is a PDCCH scrambled by a system information radio network temporary identifier (SI-RNTI) specific for identifying the repeater that the network device accesses.

In an embodiment, transmitting the system message to the repeater includes:
transmitting a first system message to the repeater, where the first system message is used for indicating a device type of a network device; and
in case that the device type of the network device is the ncr-Support network device type, transmitting a second system message for identifying the repeater that the network device accesses to the repeater.

In an embodiment, the first system message is a MIB message common to a ncr-Support network device and a non-ncr-Support network device, the second system message is a SIB-1 message transmitted on the PDSCH indicated by DCI in a first PDCCH, and the first PDCCH is a PDCCH scrambled by a SI-RNTI specific for identifying the repeater that the network device accesses.

In an embodiment, the SCI message is carried by a first PDCCH, and the first PDCCH is a PDCCH scrambled by a SI-RNTI specific for identifying the repeater that the network device accesses.

In an embodiment, the SCI message indicates the device type of the network device and/or the type of the repeater that the network device accesses through a second bit field.

An embodiment of the present application further provides a repeater, including a memory, a transceiver and a processor, where the memory is used for storing a computer program, the transceiver is used for transmitting and receiving data under control of the processor, and the processor is used for reading the computer program in the memory and performing the following operations:
obtaining a system message transmitted from a network device, where the system message includes configuration information; or
obtaining a sidelink control information (SCI) message transmitted from a network device, where the SCI message includes configuration information; or
obtaining configuration information configured by operation administration and maintenance (OAM), where the configuration information includes identity information of a network device and/or frequency information,
where the configuration information is used for indicating a device type of the network device and/or a type of a repeater that the network device accesses, and the device type of the network device includes a network-control repeater-Support (ncr-Support) network device type and a non-ncr-Support network device type.

In an embodiment, the system message indicates the device type of the network device and/or the type of the repeater that the network device accesses through a first bit field.

In an embodiment, the system message is a master information block (MIB) message, and a system information block type 1 (SIB-1) configuration parameter in a first bit field of the MIB message is used for indicating the device type of the network device and/or the type of a repeater that the network device accesses.

In an embodiment, the system message is a system information block type 1 (SIB-1) message transmitted on a physical downlink shared channel (PDSCH) indicated by downlink control information (DCI) in a first physical downlink control channel (PDCCH), where the first PDCCH is a PDCCH scrambled by a system information radio network temporary identifier (SI-RNTI) specific for identifying the repeater that the network device accesses.

In an embodiment, obtaining the system message transmitted from the network device includes:
obtaining a first system message transmitted from the network device, where the first system message is used for indicating the device type of the network device; and
obtaining a second system message transmitted from the network device for identifying the repeater that the network device accesses in case that the device type of the network device is the ncr-Support network device type.

In an embodiment, the first system message is a MIB message common to a ncr-Support network device and a non-ncr-Support network device, the second system message is a SIB-1 message transmitted on the PDSCH indicated by DCI in a first PDCCH, and the first PDCCH is a PDCCH scrambled by a SI-RNTI specific for identifying the repeater that the network device accesses.

In an embodiment, the SCI message is carried by a first PDCCH, and the first PDCCH is a PDCCH scrambled by a SI-RNTI specific for identifying the repeater that the network device accesses.

In an embodiment, the SCI message indicates the device type of the network device and/or the type of the repeater that the network device accesses through a second bit field.

In an embodiment, the operations further include:
detecting a ncr-Support network device based on the configuration information; and
in case that multiple ncr-Support network devices are detected, accessing a ncr-Support network device satisfying a predetermined condition among the multiple ncr-Support network devices; or
in case that no ncr-Support network device is detected, obtaining configuration information on another frequency other than the frequency where the configuration information is located.

An embodiment of the present application further provides a network device, including a memory, a transceiver and a processor,
where the memory is used for storing a computer program, a transceiver is used for transmitting and receiving data under control of the processor, and the processor is used for reading the computer program in the memory and performing the following operations:
transmitting a system message to a repeater, where the system message includes configuration information; or
transmitting a sidelink control information (SCI) message to a repeater, where the SCI message includes configuration information,
where the configuration information is used for indicating a device type of the network device and/or a type of a repeater that the network device accesses, and the device type of the network device includes a network-control repeater-Support (ncr-Support) network device type and a non-ncr-Support network device type.

In an embodiment, the system message indicates the device type of the network device and/or the type of the repeater that the network device accesses through a first bit field.

In an embodiment, the system message is a master information block (MIB) message, and a system information block type 1 (SIB-1) configuration parameter in a first bit field of the MIB message is used for indicating the device type of the network device and/or the type of a repeater that the network device accesses.

In an embodiment, the system message is a system information block type 1 (SIB-1) message transmitted on a physical downlink shared channel (PDSCH) indicated by downlink control information (DCI) in a first physical downlink control channel (PDCCH), where the first PDCCH is a PDCCH scrambled by a system information radio network temporary identifier (SI-RNTI) specific for identifying the repeater that the network device accesses.

In an embodiment, transmitting the system message to the repeater includes:
transmitting a first system message to the repeater, where the first system message is used for indicating a device type of a network device; and
in case that the device type of the network device is the ncr-Support network device type, transmitting a second system message for identifying the repeater that the network device accesses to the repeater.

In an embodiment, the first system message is a MIB message common to a ncr-Support network device and a non-ncr-Support network device, the second system message is a SIB-1 message transmitted on the PDSCH indicated by DCI in a first PDCCH, and the first PDCCH is a PDCCH scrambled by a SI-RNTI specific for identifying the repeater that the network device accesses.

In an embodiment, the SCI message is carried by a first PDCCH, and the first PDCCH is a PDCCH scrambled by a SI-RNTI specific for identifying the repeater that the network device accesses.

In an embodiment, the SCI message indicates the device type of the network device and/or the type of the repeater that the network device accesses through a second bit field.

An embodiment of the present application further provides an apparatus for identifying a network-control repeater-Support (ncr-Support) network device, including:
a first obtaining unit, used for obtaining a system message transmitted from a network device, where the system message includes configuration information; or
a second obtaining unit, used for obtaining a sidelink control information (SCI) message transmitted from a network device, where the SCI message includes configuration information; or
a third obtaining unit, used for obtaining configuration information configured by operation administration and maintenance (OAM), where the configuration information includes identity information of a network device and/or frequency information,
where the configuration information is used for indicating a device type of the network device and/or a type of a repeater that the network device accesses, and the device type of the network device includes a ncr-Support network device type and a non-ncr-Support network device type.

In an embodiment, the system message indicates the device type of the network device and/or the type of the repeater that the network device accesses through a first bit field.

In an embodiment, the system message is a master information block (MIB) message, and a system information block type 1 (SIB-1) configuration parameter in a first bit field of the MIB message is used for indicating the device type of the network device and/or the type of a repeater that the network device accesses.

In an embodiment, the system message is a system information block type 1 (SIB-1) message transmitted on a physical downlink shared channel (PDSCH) indicated by downlink control information (DCI) in a first physical downlink control channel (PDCCH), where the first PDCCH is a PDCCH scrambled by a system information radio network temporary identifier (SI-RNTI) specific for identifying the repeater that the network device accesses.

In an embodiment, the first obtaining unit is used for:
obtaining a first system message transmitted from the network device, where the first system message is used for indicating the device type of the network device; and
obtaining a second system message transmitted from the network device for identifying the repeater that the network device accesses in case that the device type of the network device is the ncr-Support network device type.

In an embodiment, the first system message is a MIB message common to a ncr-Support network device and a non-ncr-Support network device, the second system message is a SIB-1 message transmitted on the PDSCH indicated by DCI in a first PDCCH, and the first PDCCH is a PDCCH scrambled by a SI-RNTI specific for identifying the repeater that the network device accesses.

In an embodiment, the SCI message is carried by a first PDCCH, and the first PDCCH is a PDCCH scrambled by a SI-RNTI specific for identifying the repeater that the network device accesses.

In an embodiment, the SCI message indicates the device type of the network device and/or the type of the repeater that the network device accesses through a second bit field.

In an embodiment, the apparatus further includes a detecting unit, where the detecting unit is used for:
detecting a ncr-Support network device based on the configuration information; and
in case that multiple ncr-Support network devices are detected, accessing a ncr-Support network device satisfying a predetermined condition among the multiple ncr-Support network devices; or
in case that no ncr-Support network device is detected, obtaining configuration information on another frequency other than the frequency where the configuration information is located.

An embodiment of the present application further provides an apparatus for identifying a network-control repeater-Support (ncr-Support) network device, including:
a first transmitting unit, used for transmitting a system message to a repeater, where the system message includes configuration information; or
a second transmitting unit, used for transmitting a sidelink control information (SCI) message to a repeater, where the SCI message includes configuration information,
where the configuration information is used for indicating a device type of the network device and/or a type of a repeater that the network device accesses, and the device type of the network device includes a ncr-Support network device type and a non-ncr-Support network device type.

In an embodiment, the system message indicates the device type of the network device and/or the type of the repeater that the network device accesses through a first bit field.

In an embodiment, the system message is a master information block (MIB) message, and a system information block type 1 (SIB-1) configuration parameter in a first bit field of the MIB message is used for indicating the device type of the network device and/or the type of a repeater that the network device accesses.

In an embodiment, the system message is a system information block type 1 (SIB-1) message transmitted on a physical downlink shared channel (PDSCH) indicated by downlink control information (DCI) in a first physical downlink control channel (PDCCH), where the first PDCCH is a PDCCH scrambled by a system information radio network temporary identifier (SI-RNTI) specific for identifying the repeater that the network device accesses.

In an embodiment, the first transmitting unit is used for:
transmitting a first system message to the repeater, where the first system message is used for indicating a device type of a network device; and
in case that the device type of the network device is the ncr-Support network device type, transmitting a second system message for identifying the repeater that the network device accesses to the repeater.

In an embodiment, the first system message is a MIB message common to a ncr-Support network device and a non-ncr-Support network device, the second system message is a SIB-1 message transmitted on the PDSCH indicated by DCI in a first PDCCH, and the first PDCCH is a PDCCH scrambled by a SI-RNTI specific for identifying the repeater that the network device accesses.

In an embodiment, the SCI message is carried by a first PDCCH, and the first PDCCH is a PDCCH scrambled by a SI-RNTI specific for identifying the repeater that the network device accesses.

In an embodiment, the SCI message indicates the device type of the network device and/or the type of the repeater that the network device accesses through a second bit field.

An embodiment of the present application further provides a processor-readable storage medium storing a computer program, where the computer program is used for causing a processor to perform the methods for identifying the ncr-Support network device described above.

An embodiment of the present application further provides a computer-readable storage medium storing a computer program, where the computer program is used for causing a computer to perform the methods for identifying the ncr-Support network device described above.

An embodiment of the present application further provides a communication device-readable storage medium storing a computer program, where the computer program is used for causing a communication device to perform the methods for identifying the ncr-Support network device described above.

An embodiment of the present application further provides a chip product-readable storage medium storing a computer program, where the computer program is used for causing a chip product to perform the methods for identifying the ncr-Support network device described above.

In the methods and apparatuses for identifying the ncr-Support network device, and the storage medium provided by embodiments of the present application, the repeater may quickly identify the ncr-Support network device and access the ncr-Support network device after accessing the network by obtaining the configuration information for indicating the device type of the network device and/or the type of the repeater that the network device accesses, and both the processing capacity of the repeater and the production cost of the repeater are reduced.

### BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained based on these drawings without any creative effort for those skilled in the art.
FIG. 1 is a first schematic flowchart of a method for identifying a network-control repeater-Support (ncr-Support) network device according to an embodiment of the present application;
FIG. 2 is a second schematic flowchart of a method for identifying a ncr-Support network device according to an embodiment of the present application;
FIG. 3 is a schematic structural diagram of a repeater according to an embodiment of the present application;
FIG. 4 is a schematic structural diagram of a network device according to an embodiment of the present application.
FIG. 5 is a first schematic structural diagram of an apparatus for identifying a ncr-Support network device according to an embodiment of the present application; and
FIG. 6 is a second schematic structural diagram of an apparatus for identifying a ncr-Support network device according to an embodiment of the present application.

### DETAILED DESCRIPTION

In order to describe solutions in the embodiments of the present application, relevant knowledge is introduced below.

### (1) Repeater

The repeater, as a wireless signal relay product, may be used as one of necessary means to achieve the goal of "small capacity, large coverage". Advantages of using the repeater for network deployment are as follows. First, network coverage may be ensured without increasing the number of base stations. Second, the cost of the repeater is far lower than that of a traditional microcellular system with the same effect.

The repeater is a preferred way to extend the coverage capability of a communication network. Compared with a base station, it has advantages of simple structure, low investment and convenient installation, and may be widely used in blind spots and weak areas that are difficult to cover, such as shopping malls, hotels, airports, docks, stations, stadiums, entertainment halls, subways, tunnels, highways, islands and other places, and used to improve communication quality and solve the problem of dropped calls.

### (2) Smart Repeater

The smart repeater adds a control plane protocol stack to a traditional repeater. A network device may control some functions of the repeater by transmitting sidelink control information (SCI). In case that one repeater is deployed, the repeater needs to identify a network-control repeater-Support (ncr-Support) network device that supports an SCI interface function. Similarly, the ncr-Support network device that supports the repeater also needs to identify the repeater in order to provide the SCI to the repeater.

In the related art, there is no technology for the repeater to identify the ncr-Support network device or for the ncr-Support network device to identify the repeater. If the repeater identifies the ncr-Support network device based on a currently available identification solution between the terminal device and the network device, high processing capacity of the repeater is required, which causes a high cost of the repeater.

In view of the problems above, embodiments of the present application provide methods and apparatuses for identifying a ncr-Support network device, and a storage medium.

In the embodiments of the present application, the term "and/or" describes a related relationship of associated objects, and indicates that there can be three kinds of relationships. For example, A and/or B can represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a handheld device with a wireless connection function, or other processing device connected to a wireless modem. In different systems, names of the terminal may be different. For example, in the 5G system, the terminal device may be referred to as a user equipment (UE). A radio terminal device can communicate with one or more core networks (CN) via a radio access network (RAN), and the radio terminal device may be a mobile terminal, such as a mobile phone (or "cellular "phone) and computers with a mobile terminal device, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. The wireless terminal device may also be called a system, a subscriber unit, a subscriber station, a mobile station, a mobile, a remote station, an access point, a remote terminal device, an access terminal device, a user terminal device, a user agent, and a user device, which are not limited in the embodiments of the present application.

The network device involved in the embodiments of the present application may be a base station, and the base station may include a plurality of cells providing services for the terminal. Depending on the specific application, the network device may also be called an access point, or may be a device in the access network that communicates with wireless terminal device through one or more sectors on the air interface, or other names. Network device may be used to exchange received air frames with an Internet protocol (IP) packet, and act as a router between radio terminal device and the rest of the access network, and the rest of the access network can include an IP communication network. The network devices may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a home evolved node B (HeNB), a relay node (relay node), a Femto, a pico base station (Pico), etc., which are not limited in the embodiments of the present application. In some network structures, a network device may include a centralized unit (CU) node and a distributed unit (DU) node, and the centralized unit and the distributed unit may also be geographically separated.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

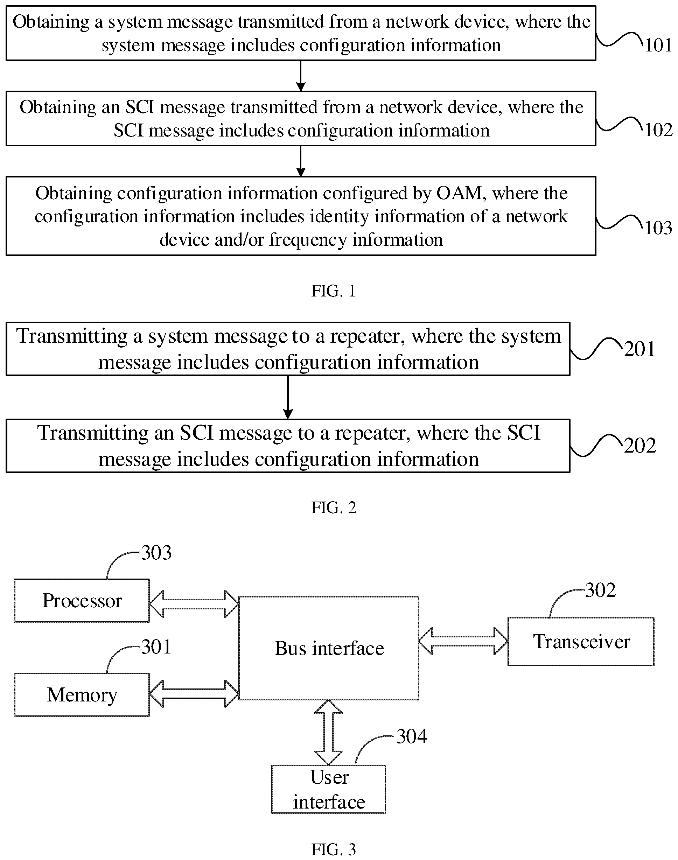

FIG. 1 is a first schematic flowchart of a method for identifying a network-control repeater-Support (ncr-Support) network device according to an embodiment of the present application. As shown in FIG. 1, the method is performed by a repeater, such as a smart repeater, and the method includes at least the following steps:
step 101: obtaining a system message transmitted from a network device, where the system message includes configuration information; or
step 102: obtaining a sidelink control information (SCI) message transmitted from a network device, where the SCI message includes configuration information; or
step 103: obtaining configuration information configured by operation administration and maintenance (OAM), where the configuration information includes identity information of a network device and/or frequency information,
where the configuration information is used for indicating a device type of the network device and/or a type of a repeater that the network device accesses, and the device type of the network device includes a ncr-Support network device type and a non-ncr-Support network device type.

In an embodiment, the repeater determines the device type of the network device and/or the type of a repeater that the network device accesses by obtaining configuration information for indicating the device type of the network device, and the device type of the network device includes the ncr-Support network device type and the non-ncr-Support network device type.

On one hand, the repeater obtains configuration information for indicating the device type of the network device and/or the type of a repeater that the network device accesses, and the configuration information may be carried by a message transmitted from the network device.

Class 1: it may be a system message transmitted from the network device. The system message includes configuration information for indicating the device type of the network device and/or the type of a repeater that the network device accesses. The system message includes, for example, a master information block (MIB) message, a system information block type 1 (SIB-1) message, etc. In an embodiment, the system message may be configured as a repeater-specific system message.

Class 2: it may be an SCI message transmitted from the network device. The SCI message includes configuration information for indicating the device type of the network device and/or the type of a repeater that the network device accesses. In an embodiment, the SCI message may be configured as a repeater-specific SCI message.

The repeater may quickly identify the ncr-Support network device and access the ncr-Support network device after accessing the network by the configuration information for indicating the device type of the network device and/or the type of the repeater that the network device accesses, which is carried in the system message or SCI message transmitted from the network device, and both the processing capacity of the repeater and the production cost of the repeater are reduced.

On the other hand, the repeater obtains configuration information for indicating the device type of the network device, and the configuration information is carried by a message transmitted from the network device or may be directly configured by a system. That is, the configuration information is not carried by an in-band signaling, the repeater is informed of a network device on which it may or may not camp by directly configuring out-of-band control information for the repeater.

Out-of-band control information refers to that control information is not transmitted through a signal on a frequency band where the repeater is located, but is directly configured through an operation system. For a repeater, the network device on which the repeater may camp is a ncr-Support network device. Only on the premise that the network device is determined to be the ncr-Support network device, the type of repeater that the ncr-Support network device may access may be further determined.

The configuration information may be configured by operation administration and maintenance (OAM), and information included in the configuration information may include identity information of a network device and/or frequency information, etc. For example, a cell identity on which the repeater may camp is configured by OAM. For another example, frequency information on which the repeater may not camp is configured by OAM.

During searching for a cell, the repeater only searches for a cell identity or frequency information on which the repeater may camp based on cell identities on which the repeater may camp configured by OAM, etc.; or, the repeater compares the cell identifiers configured by OAM on which the repeater may not camp, etc. with current cell identities and the configuration list to determine which cells may be camped.

The repeater determines whether the network device may access by the obtained configuration information configured by the system, the repeater may quickly identify the ncr-Support network device and access the ncr-Support network device after accessing the network, and both the processing capacity of the repeater and the production cost of the repeater are reduced.

In the methods for identifying the ncr-Support network device provided by embodiments of the present application, the repeater may quickly identify the ncr-Support network device and access the ncr-Support network device after accessing the network by obtaining the configuration information for indicating the device type of the network device and/or the type of the repeater that the network device accesses, and both the processing capacity of the repeater and the production cost of the repeater are reduced.

In an embodiment, the system message indicates the device type of the network device and/or the type of the repeater that the network device accesses through a first bit field.

The repeater identifies the device type of the network device through the configuration information carried in the system message transmitted from the network device, and the device type of the network device may be indicated by the first bit field in the system message.

For example, an information element (IE) indicator field configuration is added to the SIB-1 message or MIB message, and 1 bit is used for indicating whether the network device is a ncr-Support network device, or whether the network device may access the repeater. For example, "1" indicates that the network device may access the repeater, and is a ncr-Support network device, and "0" indicates that the network device may not access the repeater, and is a non-ncr-Support network device.

The repeater identifies the device type of the network device through the configuration information carried in the system message transmitted from the network device, and the type of the repeater that the network device accesses may be indicated by the first bit field in the system message.

For example, an IE indicator field configuration is added to the SIB-1 message or MIB message. No configuration means that the network device may not access the repeater and is a non-ncr-Support network device. If the IE indicator field configuration is configured, it means that the network device may access the repeater and is a ncr-Support network device. The first bit field in the IE indicator field is further used for indicating the type of repeater that the network device accesses. "1" indicates that it may access a class A repeater, and "0" indicates that it may access a class B repeater.

The repeater identifies the device type of the network device through the configuration information carried in the system message transmitted from the network device, and both the device type of the network device and the type of the repeater that the network device accesses may be indicated by the first bit field in the system message.

For example, an IE indicator field configuration is added to the SIB-1 message or MIB message, such as indicating the device type of the network device and the type of the repeater that the network device accesses by 2 bits. For example, "00" indicates that the network device may not access the repeater, "01" indicates that the network device may access the repeater but may only access a class A repeater, "10" indicates that the network device may access the repeater but may only access a class B repeater, and "11" indicates that the network device may access the repeater and may access both the class A repeater and the class B repeater.

Class A and class B are used for indicating different types of repeaters, and characterizing information-receiving capabilities or controllable functions of different repeaters. For example, class A indicates a repeater that may receive broadcast information, and class B indicates a repeater that may receive SCI control information. For example, class A indicates a repeater that may perform slot control, and class B indicates a repeater that may perform power control. Supporting the capabilities or functions of both class A and class B simultaneously may be expressed as class A+B.

It should be noted that the above-mentioned mode for indicating the device type of the network device and/or the type of the repeater that the network device accesses through the bit field is only a few specific implementations, and the protection scope of the embodiments of the present application is not limited thereto.

In the method for identifying the ncr-Support network device provided by embodiments of the present application, the repeater may quickly identify both the ncr-Support network device and the type of the repeater that the ncr-Support network device may access and selectively access the ncr-Support network device after accessing the network by adding a bit field in the system message transmitted from the network device to indicate the device type of the network device and/or the type of the repeater that the network device accesses, and the processing capacity of the repeater and the production cost of the repeater are reduced.

In an embodiment, the system message is a master information block (MIB) message, and a system information block type 1 (SIB-1) configuration parameter in a first bit field of the MIB message is used for indicating the device type of the network device and/or the type of a repeater that the network device accesses.

In an embodiment, the system message received by the repeater is a MIB message, and a first bit field of the MIB message is used for indicating the device type of the network device and/or the type of a repeater that the network device accesses. Further, the device type of the network device and/or the type of a repeater that the network device accesses may be indicated by a SIB configuration parameter in the first bit field.

The device type of the network device and/or the type of a repeater that the network device accesses may be implicitly indicated by using the special configuration of the IE indicator field. For example, in case that a configuration parameter pdcch-ConfigSIB1 in the MIB message has a specific value, it indicates that the network device may access the repeater and is a ncr-Support network device. Otherwise, it may not access the repeater and is a non-ncr-Support network device. Further, the network device may access a class A repeater in case that pdcch-ConfigSIB1 has some values, the network device may access a class B repeater in case that pdcch-ConfigSIB 1 has some values, and the network device may access a class A+B repeater in case that pdcch-ConfigSIB 1 has some values.

In the method for identifying the ncr-Support network device provided by embodiments of the present application, the repeater may quickly identify both the ncr-Support network device and the type of the repeater that the ncr-Support network device may access and selectively access the ncr-Support network device after accessing the network by using the SIB-1 configuration parameter of the first bit field in the MIB message transmitted from the network device to indicate the device type of the network device and/or the type of the repeater that the network device accesses, and the processing capacity of the repeater and the production cost of the repeater are reduced.

In an embodiment, the system message is a system information block type 1 (SIB-1) message transmitted on a physical downlink shared channel (PDSCH) indicated by downlink control information (DCI) in a first physical downlink control channel (PDCCH), where the first PDCCH is a PDCCH scrambled by a system information radio network temporary identifier (SI-RNTI) specific for identifying the repeater that the network device accesses.

The system message is a SIB-1 message defined for a repeater, and the SIB-1 message is transmitted via a PDSCH indicated by downlink control information (DCI) in a first PDCCH. The first PDCCH is a PDCCH scrambled by the SI-RNTI specific for identifying the repeater that the network device accesses.

The SI-RNTI is specific for identifying a repeater that a network device accesses and may be predefined. For example, SI-RNTI = 0xfff3. The network device transmits a repeater-specific SIB-1 message. When the repeater accesses, the repeater descramble Type0-PDCCH using SI-RNTI, and then receives the SIB-1 message transmitted on the corresponding PDSCH through the DCI in the detected PDCCH, and remaining minimum system information (RMSI) is detected. The DCI includes information such as the resource location of the PDSCH. The repeater determines whether the network device is a ncr-Support network device or whether the network device may access based on the information in the RMSI.

In the method for identifying the ncr-Support network device provided by embodiments of the present application, the repeater may quickly identify the ncr-Support network device after accessing the network by the SIB-1 message defined for the repeater transmitted from the network device, and the processing capacity of the repeater and the production cost of the repeater are reduced.

In an embodiment, obtaining the system message transmitted from the network device includes:
obtaining a first system message transmitted from the network device, where the first system message is used for indicating the device type of the network device; and
obtaining a second system message transmitted from the network device for identifying the repeater that the network device accesses in case that the device type of the network device is the ncr-Support network device type.

In an embodiment, the repeater obtains the first system message transmitted from the network device, where the first system message is used for indicating the device type of the network device.

In case that the device type of the network device is a ncr-Support network device type, the repeater further obtains a second system message transmitted from the network device for identifying the repeater that the network device accesses, and further determines whether the repeater may access the ncr-Support network device based on the type of the repeater. For example, for a class A repeater, after the repeater identifies the ncr-Support network device, the class A repeater may not access for a ncr-Support network device that only supports access to class B repeater. In case that the device type of the network device is a non-ncr-Support network device type, the repeater no longer detects the second system message defined for the repeater.

In an embodiment, the first system message is a MIB message common to a ncr-Support network device and a non-ncr-Support network device, the second system message is a SIB-1 message transmitted on the PDSCH indicated by DCI in a first PDCCH, and the first PDCCH is a PDCCH scrambled by a SI-RNTI specific for identifying the repeater that the network device accesses.

In an embodiment, the first system message is a MIB message common to a ncr-Support network device and a non-ncr-Support network device, and the device type of the network device is implicitly indicated by the special configuration of some IE indicator fields in the MIB. For example, in case that the configuration parameter pdcch-ConfigSIB1 in the MIB has a specific value, it indicates that the network device may access the repeater, and is a ncr-Support network device. Otherwise, the network device may not access the repeater and is a non-ncr-Support network device.

Further, for the ncr-Support network device, the repeater may further receive a SIB-1 message defined for the repeater, i.e., the second system message. The SIB-1 message is transmitted through the PDSCH indicated by the DCI in the first PDCCH. The first PDCCH is a PDCCH scrambled by the SI-RNTI specific for identifying the repeater that the network device accesses.

The SI-RNTI is specific for identifying a repeater that a network device accesses and may be predefined. The network device transmits a repeater-specific SIB-1 message. When the repeater accesses, the repeater uses SI-RNTI to detect RMSI on Type0-PDCCH, and then detects the DCI in the PDCCH scrambled with SI-RNTI to receive the corresponding SIB-1 message transmitted on the PDSCH. The DCI includes information such as the resource location of the PDSCH.

When there is no accessible network device, the repeater may be informed based on the first system message and no longer detect the SIB-1 information, which saves power.

In the method for identifying the ncr-Support network device provided by embodiments of the present application, the repeater determines whether to further obtain the second system message defined for the repeater by obtaining the first system message for indicating the device type of the network device transmitted from the network device, the repeater may quickly identify the ncr-Support network device after accessing the network, and detection for the second system message may not be performed when no accessible host base station is present, which saves power.

In an embodiment, the SCI message is carried by a first PDCCH, and the first PDCCH is a PDCCH scrambled by a SI-RNTI specific for identifying the repeater that the network device accesses.

In an embodiment, the repeater obtains the SCI message transmitted from the network device, which is carried by the first PDCCH and scrambled by the SI-RNTI.

The SI-RNTI is specific for identifying a repeater that a network device accesses and may be predefined. The network device transmits a repeater-specific SCI message, the SCI message is carried by the first PDCCH, and the first PDCCH is a PDCCH scrambled by the SI-RNTI specific for identifying the repeater that the network device accesses. The repeater detects the SCI message carried by Type0-PDCCH using SI-RNTI, and then determines, based on the SCI message, whether the network device is a ncr-Support network device or a non-ncr-Support network device, and whether it may be accessed or not.

In an embodiment, the SCI message indicates the device type of the network device and/or the type of the repeater that the network device accesses through a second bit field.

In an embodiment, the SCI message received from the repeater indicates the device type of the network device and/or the type of the repeater that the network device accesses through a second bit field.

For example, 1 bit is used for indicating whether the network device is a ncr-Support network device, or whether it may access the repeater. For example, "1" indicates that the network device may access the repeater, and is a ncr-Support network device; "0" indicates that the network device may not access the repeater, and is a non-ncr-Support network device.

For example, 2 bits are used for indicating the device type of the network device and the type of a repeater that the network device accesses. For example, "00" indicates that the network device may not access the repeater, "01" indicates that the network device may access the repeater but may only access a class A repeater, "10" indicates that the network device may access the repeater but may only access a class B repeater, and "11" indicates that the network device may access the repeater and may access both the class A repeater and the class B repeater.

In the method for identifying the ncr-Support network device provided by embodiments of the present application, the repeater determines the device type of the network device and/or the type of the repeater that the network device accesses by obtaining the repeater-specific SCI message transmitted from the network device, the repeater may quickly identify the ncr-Support network device, and the processing capacity of the repeater and the production cost of the repeater are reduced.

In an embodiment, the method further includes:
detecting a ncr-Support network device based on the configuration information; and
in case that multiple ncr-Support network devices are detected, accessing a ncr-Support network device satisfying a predetermined condition among the multiple ncr-Support network devices; or
in case that no ncr-Support network device is detected, obtaining configuration information on another frequency other than the frequency where the configuration information is located.

In an embodiment, after obtaining the configuration information for indicating the device type of the network device, the repeater detects the ncr-Support network device based on the configuration information.

If the repeater detects the ncr-Support network device, the repeater performs the subsequent access procedures. Otherwise, the repeater continues to obtain the configuration information on another frequency other than the frequency where the configuration information is located.

Before the repeater accesses to a certain network device, the configuration information may be searched on each frequency every first period. After the repeater accesses a certain network device, it may search for configuration information on each frequency every second period. The first period and the second period may be the same or different.

If the repeater detects multiple accessible ncr-Support network devices, it may determine which ncr-Support network device needs to access based on a predetermined condition, such as accessing the ncr-Support network device with the largest receiving power, or accessing the ncr-Support network device with the smallest interference.

In the methods for identifying the ncr-Support network device provided by embodiments of the present application, the repeater may quickly identify the ncr-Support network device and access the ncr-Support network device after accessing the network by obtaining the configuration information for the device type of the network device, and both the processing capacity of the repeater and the production cost of the repeater are reduced.

FIG. 2 is a second schematic flowchart of a method for identifying a ncr-Support network device according to an embodiment of the present application. As shown in FIG. 2, the method is performed by a network device, such as a base station or a host base station, etc. The method includes at least the following steps:
step 201: transmitting a system message to a repeater, where the system message includes configuration information; or
step 202: transmitting a sidelink control information (SCI) message to a repeater, where the SCI message includes configuration information,
where the configuration information is used for indicating a device type of the network device and/or a type of a repeater that the network device accesses, and the device type of the network device includes a ncr-Support network device type and a non-ncr-Support network device type.

In an embodiment, for the network device, the network device transmits a system message or an SCI message to the repeater, where the SCI message carries configuration information for indicating the device type of the network device and/or the type of a repeater that the network device accesses. The repeater may determine whether the network device is a ncr-Support network device based on the configuration information, and then accesses the ncr-Support network device.

In the method for identifying the ncr-Support network device provided by embodiments of the present application, the network device transmits configuration information for indicating the device type of the network device and/or the type of the repeater that the network device accesses to the repeater, the repeater may quickly identify the ncr-Support network device and access the ncr-Support network device after accessing the network, and both the processing capacity of the repeater and the production cost of the repeater are reduced.

In an embodiment, the system message indicates the device type of the network device and/or the type of the repeater that the network device accesses through a first bit field.

In an embodiment, the SCI message transmitted from a network device to the repeater may indicate the device type of the network device and/or the type of the repeater that the network device accesses through a first bit field.

For example, the network device adds an information element (IE) indicator field configuration in the SIB-1 message, and indicates the device type of the network device through 1 bit. For example, "1" indicates that the network device is a ncr-Support network device, and "0" indicates that the network device is a non-ncr-Support network device.

For example, the network device adds an IE indicator field configuration in a master information block (MIB) message, and indicates the type of the repeater that the network device accesses through 1 bit. For example, configuring the first bit field indicates that the network device is a ncr-Support network device, and not configuring the first bit field indicates that the network device is a non-ncr-Support network device. "1" indicates that the network device may access a class A repeater, and "0" indicates that the network device may access a class B repeater.

For example, the network device adds the IE indicator field in the MIB message, and indicates the device type of the network device and the type of the repeater that the network device accesses through 2 bits. For example, "00" indicates that the network device may not access the repeater, "01" indicates that the network device may access the repeater but may only access a class A repeater, "10" indicates that the network device may access the repeater but may only access a class B repeater, and "11" indicates that the network device may access the repeater and may access both the class A repeater and the class B repeater.

Class A and class B are used for indicating different types of repeaters, and characterize the receiving information capabilities or controllable functions of different repeaters. For example, class A indicates a repeater that may receive broadcast information, and class B indicates a repeater that may receive SCI control information. For example, class A indicates a repeater that may perform slot control, and class B indicates a repeater that may perform power control. Supporting capability or function of both class A and class B simultaneously may be expressed as class A+B.

In the method for identifying the ncr-Support network device provided by embodiments of the present application, a first indicator field is added to the system message transmitted from the network device to the repeater to indicate the device type of the network device and/or the type of the repeater that the network device accesses, the repeater may quickly identify both the ncr-Support network device and the type of the repeater that the ncr-Support network device may access and selectively access the ncr-Support network device after accessing the network, and the processing capacity of the repeater and the production cost of the repeater are reduced.

In an embodiment, the system message is the MIB message, and a system information block type 1 (SIB-1) configuration parameter in a first bit field of the MIB message is used for indicating the device type of the network device and/or the type of a repeater that the network device accesses.

In an embodiment, the system message received from the repeater is the MIB message, and the network device configures the SIB-1 configuration parameter in the first bit field of the MIB message to indicate the device type of the network device and/or the type of a repeater that the network device accesses.

The device type of the network device and/or the type of the repeater that the network device accesses may be implicitly indicated by using the special configuration of the IE indicator field. For example, in case that a configuration parameter pdcch-ConfigSIB1 in the MIB message has a specific value, it indicates that the network device may access the repeater and is a ncr-Support network device. Otherwise, the network device may not access the repeater and is a non-ncr-Support network device. Further, the network device may access a class A repeater in case that pdcch-ConfigSIB 1 has some values, the network device may access a class B repeater in case that pdcch-ConfigSIB1 has some values, and the network device may access a class A+B repeater in case that pdcch-ConfigSIB1 has some values.

In the method for identifying the ncr-Support network device provided by embodiments of the present application, the network device configures the SIB-1 configuration parameter of the first bit field in the MIB message to indicate the device type of the network device and/or the type of the repeater that the network device accesses, the repeater may quickly identify both the ncr-Support network device and the type of the repeater that the ncr-Support network device may access and selectively access the ncr-Support network device after accessing the network, and the processing capacity of the repeater and the production cost of the repeater are reduced.

In an embodiment, the system message is a system information block type 1 (SIB-1) message transmitted on a physical downlink shared channel (PDSCH) indicated by downlink control information (DCI) in a first physical downlink control channel (PDCCH), where the first PDCCH is a PDCCH scrambled by a system information radio network temporary identifier (SI-RNTI) specific for identifying the repeater that the network device accesses.

In an embodiment, the system message transmitted from the network device to the repeater is a SIB-1 message defined for the repeater, and the SIB-1 message is transmitted via the PDSCH indicated by the DCI in the first PDCCH. The first PDCCH is a PDCCH scrambled by the SI-RNTI specific for identifying the repeater that the network device accesses.

The SI-RNTI is specific for identifying a repeater that a network device accesses and may be predefined. For example, SI-RNTI = 0xfff3. The network device transmits a repeater-specific SIB-1 message, and Type0-PDCCH corresponding to the SIB-1 message is scrambled by the SI-RNTI.

In the method for identifying the ncr-Support network device provided by embodiments of the present application, the network device transmits the SIB-1 message defined for the repeater to the repeater, the repeater may quickly identify the ncr-Support network device and the type of repeater that the ncr-Support network device may access and selectively access the ncr-Support network device after accessing the network, and the processing capacity of the repeater and the production cost of the repeater are reduced.

In an embodiment, transmitting the system message to the repeater includes:
transmitting a first system message to the repeater, where the first system message is used for indicating a device type of a network device; and
in case that the device type of the network device is the ncr-Support network device type, transmitting a second system message for identifying the repeater that the network device accesses to the repeater.

In an embodiment, the network device transmits a first system message to the repeater, where the first system message is used for indicating the device type of the network device. If the network device is a ncr-Support network device, the network device further transmits a second system message specific for identifying the repeater that the network device accesses to the repeater. If the network device is a non-ncr-Support network device, there is no need to transmit the second system message to the repeater.

In an embodiment, the first system message is a MIB message common to a ncr-Support network device and a non-ncr-Support network device, the second system message is a SIB-1 message transmitted on the PDSCH indicated by DCI in a first PDCCH, and the first PDCCH is a PDCCH scrambled by a SI-RNTI specific for identifying the repeater that the network device accesses.

In an embodiment, the first system message is the MIB message common to a ncr-Support network device and a non-ncr-Support network device, and the network device implicitly indicates the device type of the network device by using the special configuration of some IE indicator fields in the MIB. For example, in case that the configuration parameter pdcch-ConfigSIB1 in the MIB has a specific value, it indicates that the network device may access the repeater, and is a ncr-Support network device. Otherwise, the network device may not access the repeater and is a non-ncr-Support network device.

For the ncr-Support network device, the network device further transmits the SIB-1 message defined for the repeater, i.e., the second system message to the repeater. The SIB-1 message is transmitted through the PDSCH indicated by the DCI in the first PDCCH. The first PDCCH is a PDCCH scrambled by the SI-RNTI specific for identifying the repeater that the network device accesses.

The SI-RNTI is specific for identifying a repeater that a network device accesses and may be predefined. The network device transmits a repeater-specific SIB-1 message. When the repeater accesses, the repeater uses SI-RNTI to detect RMSI on Type0-PDCCH, and then detects the DCI in the PDCCH scrambled with SI-RNTI to receive the corresponding SIB-1 message transmitted on the PDSCH. The DCI includes information such as the resource location of the PDSCH.

When there is no accessible network device, the repeater may be informed based on the first system message and no longer detect the SIB-1 information, which saves power.

In the method for identifying the ncr-Support network device provided by embodiments of the present application, the network device transmits the first system message for indicating the device type of the network device to the repeater, the repeater determines whether to further obtain the second system message defined for the repeater, the repeater may quickly identify the ncr-Support network device after accessing the network, and detection for the second system message may not be performed when no accessible host base station is present, which saves power.

In an embodiment, the SCI message is carried by a first PDCCH, and the first PDCCH is a PDCCH scrambled by a SI-RNTI specific for identifying the repeater that the network device accesses.

In an embodiment, the SCI message transmitted from the network device to the repeater is carried by the first PDCCH and scrambled by the SI-RNTI.

The SI-RNTI is specific for identifying a repeater that a network device accesses, and may be predefined. The network device transmits a repeater-specific SCI message, the SCI message is carried by the first PDCCH, and the first PDCCH is a PDCCH scrambled by the SI-RNTI specific for identifying the repeater that the network device accesses. The repeater detects the SCI message carried by Type0-PDCCH using SI-RNTI, and then determines, based on the SCI message, whether the network device is a ncr-Support network device or a non-ncr-Support network device, and whether it may be accessed or not.

In an embodiment, the SCI message indicates the device type of the network device and/or the type of the repeater that the network device accesses through a second bit field.

In an embodiment, the SCI message transmitted from the network device indicates the device type of the network device and/or the type of the repeater that the network device accesses through a second bit field.

For example, 1 bit is used for indicating whether the network device is a ncr-Support network device, or whether it may access the repeater. For example, "1" indicates that the network device may access the repeater, and is a ncr-Support network device, and "0" indicates that the network device may not access the repeater, and is a non-ncr-Support network device.

For example, 2 bits are used for indicating the device type of the network device and the type of a repeater that the network device accesses. For example, "00" indicates that the network device may not access the repeater, "01" indicates that the network device may access the repeater but may only access a class A repeater, "10" indicates that the network device may access the repeater but may only access a class B repeater, and "11" indicates that the network device may access the repeater and may access both the class A repeater and the class B repeater.

In the method for identifying the ncr-Support network device provided by embodiments of the present application, the network device transmits the repeater-specific SCI message to the repeater, the repeater may determine the device type of the network device and/or the type of the repeater that the network device accesses, may quickly identify the ncr-Support network device after accessing the network, and the processing capacity of the repeater and the production cost of the repeater are reduced.

The solutions of the embodiments of the present application are further introduced below through several specific examples.

Example 1: the base station adds IE indicator field configuration in SIB-1/MIB.

### Scenario 1

(1) The base station indicates whether the base station supports the access to the repeater through the additionally added IE indicator field configuration in SIB-1/MIB. For example, 1 bit is added, "1" indicates that the repeater may be accessed, and "0" indicates that the repeater may not be accessed.
(2) The repeater reads the additionally added IE indicator field configuration in the SIB-1/MIB by receiving and detecting broadcast information to determine whether it may access the base station.
(3) In case that the repeater may access the base station, it performs the subsequent access procedures. In case that it may not access the base station, it continues to receive and detect the broadcast information on other frequencies.
(4) Before the repeater accesses a certain base station, it searches for broadcast signaling on each frequency every first period.
(5) After the repeater accesses a base station, it searches for broadcast signaling on each frequency every second period. The first period and the second period may be the same or different.
(6) In case that there are multiple accessible base stations, the repeater determines which base station to access based on a predetermined criteria and measurement values, such as the base station with the largest receiving power and the base station with the least interference, etc.

### Scenario 2

(1) The base station indicates whether the base station may support access of different types of repeaters through the additionally added IE indicator field configuration in SIB-1/MIB. "1" means that the class A repeater may be accessed, "0" means that the class B repeater may be accessed, and no configuration means that the base station may not access the repeater.
(2) The repeater reads the additionally added IE indicator field configuration in the SIB-1/MIB by receiving and detecting broadcast information to determine whether its own device type may access the base station.
(3) In case that the repeater may access the base station, it performs the subsequent access procedures. In case that it may not access the base station, it continues to receive and detect the broadcast information on other frequencies.
(4) Before the repeater accesses a certain base station, it searches for broadcast signaling on each frequency every first period.
(5) After the repeater accesses a base station, it searches for broadcast signaling on each frequency every second period. The first period and the second period may be the same or different.
(6) In case that there are multiple accessible base stations, the repeater determines which base station to access based on a predetermined criteria and measurement values, such as the base station with the largest receiving power and the base station with the least interference, etc.

### Scenario 3

(1) The base station indicates whether the base station may access the repeater and whether it may support access of different types of repeaters through the additionally added IE indicator field configuration in SIB-1/MIB. "00" indicates that the network device may not access the repeater, "01" indicates that the network device may access the repeater but may only access a class A repeater, "10" indicates that the network device may access the repeater but may only access a class B repeater, and "11" indicates that the network device may access the repeater and may access both the class A repeater and the class B repeater.
(2) The repeater reads the additionally added IE indicator field configuration in the SIB-1/MIB by receiving and detecting broadcast information to determine whether its own device type may access the base station.
(3) In case that the repeater may access the base station, it performs the subsequent access procedures. In case that it may not access the base station, it continues to receive and detect the broadcast information on other frequencies.
(4) Before the repeater accesses a certain base station, it searches for broadcast signaling on each frequency every first period.
(5) After the repeater accesses a base station, it searches for broadcast signaling on each frequency every second period. The first period and the second period may be the same or different.
(6) In case that there are multiple accessible base stations, the repeater determines which base station to access based on a predetermined criteria and measurement values, such as the base station with the largest receiving power and the base station with the least interference, etc.

### Scenario 4

(1) The base station implicitly indicates whether the base station may access the repeater through the special configuration of one or some parameters in SIB-1/MIB. For example, in scenario 1, the configuration parameter pdcch-ConfigSIB1 in a MIB has some values, it indicates that the base station may access the repeater, otherwise, the base station may not access the repeater. For example, in scenario 2, the base station may not access a repeater in case that pdcch-ConfigSIB1 has some values, may access a class A repeater in case that pdcch-ConfigSIB1 has some values and may access class B repeaters in case that pdcch-ConfigSIB1 has some values. For example, in scenario 3, the base station may not access a class A repeater in case that pdcch-ConfigSIB 1 has some values, may access a class B repeater in case that pdcch-ConfigSIB1 has some values and may access both a class A repeater and a class B repeater in case that pdcch-ConfigSIB1 has some values.
(2) In case that the repeater may access the base station, it performs the subsequent access procedures. In case that it may not access the base station, it continues to receive and detect the broadcast information on other frequencies.
(3) Before the repeater accesses a certain base station, it searches for broadcast signaling on each frequency every first period.
(4) After the repeater accesses a base station, it searches for broadcast signaling on each frequency every second period. The first period and the second period may be the same or different.
(5) In case that there are multiple accessible base stations, the repeater determines which base station to access based on a predetermined criteria and measurement values, such as the base station with the largest receiving power and the base station with the least interference, etc.

Example 2: the base station transmits a SIB-1 message defined for the repeater.

### Scenario 1

(1) The system defines a SI-RNTI specific for the repeater identification. The SI-RNTI is predefined, such as SI-RNTI = 0xfff3.
(2) The base station transmits a SIB-1 message defined for the repeater. The SIB-1 message carries information for indicating whether the base station may access the repeater. Type0-PDCCH corresponding to the SIB-1 message is scrambled by SI-RNTI.
(3) The repeater uses SI-RNTI to descramble Type0-PDCCH, and then receives the SIB-1 message transmitted on the corresponding PDSCH through the DCI in the detected PDCCH (including information such as the resource location of the PDSCH) and detects RMSI.
(4) The repeater determines whether it may access the base station based on the information in the RMSI.
(5) In case that the repeater may access the base station, it performs the subsequent access procedures. In case that it may not access the base station, it continues to receive and detect the broadcast information on other frequencies.
(6) Before the repeater accesses a certain base station, it searches for broadcast signaling on each frequency every first period.
(7) After the repeater accesses a base station, it searches for broadcast signaling on each frequency every second period. The first period and the second period may be the same or different.
(8) In case that there are multiple accessible base stations, the repeater determines which base station to access based on a predetermined criteria and measurement values, such as the base station with the largest receiving power and the base station with the least interference, etc.

Example 3: some special configurations of MIB are used to indicate whether the base station may access the repeater. When these configurations are used, the base station transmits the SIB-1 message defined for the repeater.

### Scenario 1

(1) The base station implicitly indicates whether the base station may access the repeater through the special configuration of one or some parameters in SIB-1/MIB.
(2) In case that the base station may access the repeater, it further transmits the SIB-1 message defined for the repeater. In case that it may not access the repeater, it does not transmit the SIB-1 message defined for the repeater.
(3) In case that the repeater accesses, the repeater first detects the special configuration of one or some parameters in SIB-1/MIB. If it is determined that the base station is an accessible base station for the repeater, the repeater further detects the SIB-1 message defined for the repeater to determine whether it may access the base station.
(4) In case that the repeater may access the base station, it performs the subsequent access procedures. In case that it may not access the base station, it continues to receive and detect the broadcast information on other frequencies.
(5) Before the repeater accesses a certain base station, it searches for broadcast signaling on each frequency every first period.
(6) After the repeater accesses a base station, it searches for broadcast signaling on each frequency every second period. The first period and the second period may be the same or different.
(7) In case that there are multiple accessible base stations, the repeater determines which base station to access based on a predetermined criteria and measurement values, such as the base station with the largest receiving power and the base station with the least interference, etc.

Example 4: information of a host base station is indicated through out-of-band control information.

### Scenario 1

(1) The repeater is informed of a network device on which it may camp by directly configuring out-of-band control information for the repeater. The form for configuring out-of-band control information may include: OAM configuration. For example, OAM configures a cell identity or frequency information on which the repeater may camp, or OAM configures a cell identity or frequency information on which the repeater may not camp.
(2) The repeater searches for cells, and only searches for the frequencies on which the repeater may camp, or compares the current cell identity and configuration list to determine which frequencies on which the repeater may camp.

Example 5: information of a host base station is indicated through an SCI message.

### Scenario 1

(1) The system defines a SI-RNTI specific for the repeater identification. The SI-RNTI is predefined, such as SI-RNTI = 0xfff3.
(2) The base station transmits a repeater-specific SCI message. The SCI message is carried by Type0-PDCCH and scrambled by SI-RNTI. It carries information for indicating whether the base station may access the repeater and the type of repeater that the base station may access.
(3) In case that the repeater accesses, the repeater uses SI-RNTI to descramble Type0-PDCCH and then detects the transmitted SCI message.
(4) The repeater determines whether it may access the base station based on information carried in the SCI message.
(5) In case that the repeater may access the base station, it performs the subsequent access procedures. In case that it may not access the base station, it continues to receive and detect the broadcast information on other frequencies.
(6) Before the repeater accesses a base station, it searches for broadcast signaling on each frequency every first period.
(7) After the repeater accesses a base station, it searches for broadcast signaling on each frequency every second period. The first period and the second period may be the same or different.
(8) In case that there are multiple accessible base stations, the repeater determines which base station to access based on a predetermined criteria and measurement values, such as the base station with the largest receiving power and the base station with the least interference, etc.

FIG. 3 is a schematic structural diagram of a repeater according to an embodiment of the present application. As shown in FIG. 3, the repeater includes a memory 301, a transceiver 302, and a processor 303.

The memory 301 is used for storing a computer program, and the transceiver 302 is used for transmitting and receiving data under control of the processor 303.

In an embodiment, the transceiver 302 is used for transmitting and receiving data under control of the processor 303.

In FIG. 3, a bus architecture may include any number of interconnected buses and bridges, which are linked together through various circuits of one or more processors represented by processor 303 and one or more memories represented by the memory 301. The bus architecture may also link together various other circuits, such as peripherals, voltage regulators, and power management circuits, which are well known in the art, and therefore will not be further described in the present application. The bus interface provides an interface. The transceiver 302 may be multiple elements, i.e., including a transmitter and a receiver, units for providing communication with various other devices over transmission media including wireless channels, wired channels, fiber optic cables, and the like. For different user equipment, the user interface 304 may also be an interface capable of externally or internally connecting the required equipment, and the connected equipment includes, but not limited to, a keypad, a display, a speaker, a microphone, a joystick, and the like.

The processor 303 is responsible for managing the bus architecture and general processing, and the memory 301 may store data used by the processor 303 when performing operations.

The processor 303 may be a central processing unit (CPU), an application specific integrated circuit (ASIC), a field-programmable gate array (FPGA), or a complex programmable logic device (CPLD), the processor can also use a multi-core architecture.

The processor is configured to perform any one of the methods of the embodiments of the present application based on the obtained executable instructions by calling the computer program stored in the memory. The processor and memory may also be physically separated.

The processor 303 is used for reading the computer program in the memory 301 and performing the following operations:
obtaining a system message transmitted from a network device, where the system message includes configuration information; or
obtaining a sidelink control information (SCI) message transmitted from a network device, where the SCI message includes configuration information; or
obtaining configuration information configured by operation administration and maintenance (OAM), where the configuration information includes identity information of a network device and/or frequency information,
where the configuration information is used for indicating a device type of the network device and/or a type of a repeater that the network device accesses, and the device type of the network device includes a ncr-Support network device type and a non-ncr-Support network device type.

In an embodiment, the system message indicates the device type of the network device and/or the type of the repeater that the network device accesses through a first bit field.

In an embodiment, the system message is a master information block (MIB) message, and a system information block type 1 (SIB-1) configuration parameter in a first bit field of the MIB message is used for indicating the device type of the network device and/or the type of a repeater that the network device accesses.

In an embodiment, the system message is a system information block type 1 (SIB-1) message transmitted on a physical downlink shared channel (PDSCH) indicated by downlink control information (DCI) in a first physical downlink control channel (PDCCH), where the first PDCCH is a PDCCH scrambled by a system information radio network temporary identifier (SI-RNTI) specific for identifying the repeater that the network device accesses.

In an embodiment, obtaining the system message transmitted from the network device includes:
obtaining a first system message transmitted from the network device, where the first system message is used for indicating the device type of the network device; and
obtaining a second system message transmitted from the network device for identifying the repeater that the network device accesses in case that the device type of the network device is the ncr-Support network device type.

In an embodiment, the first system message is a MIB message common to a ncr-Support network device and a non-ncr-Support network device, the second system message is a SIB-1 message transmitted on the PDSCH indicated by DCI in a first PDCCH, and the first PDCCH is a PDCCH scrambled by a SI-RNTI specific for identifying the repeater that the network device accesses.

In an embodiment, the SCI message is carried by a first PDCCH, and the first PDCCH is a PDCCH scrambled by a SI-RNTI specific for identifying the repeater that the network device accesses.

In an embodiment, the SCI message indicates the device type of the network device and/or the type of the repeater that the network device accesses through a second bit field.

In an embodiment, the operations further include:
detecting a ncr-Support network device based on the configuration information; and
in case that multiple ncr-Support network devices are detected, accessing a ncr-Support network device satisfying a predetermined condition among the multiple ncr-Support network devices; or
in case that no ncr-Support network device is detected, obtaining configuration information on another frequency other than the frequency where the configuration information is located.

It should be noted here that the above-mentioned repeater provided by the embodiments of the present application may implement all the method steps implemented by the above-mentioned method embodiments performed by the repeater, and may achieve the same effect. The same parts and beneficial effects as the same method embodiments is not repeated in the present application.

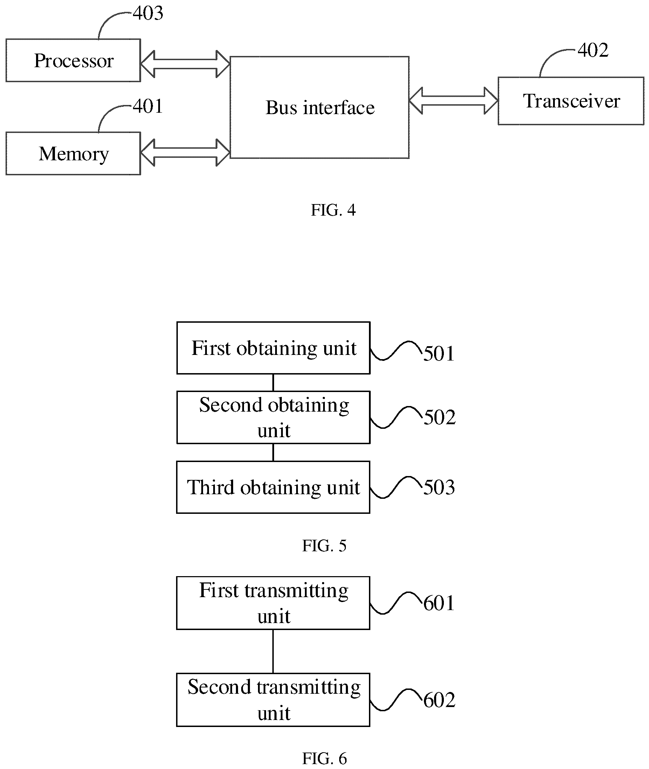

FIG. 4 is a schematic structural diagram of a network device according to an embodiment of the present application. As shown in FIG. 4, the terminal device includes a memory 401, a transceiver 402, and a processor 403.

The memory 401 is used for storing a computer program, and the transceiver 402 is used for transmitting and receiving data under control of the processor 403.

In an embodiment, the transceiver 402 is used for transmitting and receiving data under control of the processor 403

In FIG. 4, a bus architecture may include any number of interconnected buses and bridges, which are linked together through various circuits of one or more processors represented by processor 403 and one or more memories represented by the memory 401. The bus architecture may also link together various other circuits, such as peripherals, voltage regulators, and power management circuits, which are well known in the art, and therefore will not be further described in the present application. The bus interface provides an interface. The transceiver 402 may be multiple elements, i.e., including a transmitter and a receiver, units for providing communication with various other devices over transmission media including wireless channels, wired channels, fiber optic cables, and the like. The processor 403 is responsible for managing the bus architecture and general processing, and the memory 401 may store data used by the processor 403 when performing operations.

The processor 403 may be a central processing unit (CPU), an application specific integrated circuit (ASIC), a field-programmable gate array (FPGA), or a complex programmable logic device (CPLD), the processor can also use a multi-core architecture.

The processor 403 is used for reading the computer program in the memory 401 and perform the following operations:
transmitting a system message to a repeater, where the system message includes configuration information; or
transmitting a sidelink control information (SCI) message to a repeater, where the SCI message includes configuration information,
where the configuration information is used for indicating a device type of the network device and/or a type of a repeater that the network device accesses, and the device type of the network device includes a ncr-Support network device type and a non-ncr-Support network device type.

In an embodiment, the system message indicates the device type of the network device and/or the type of the repeater that the network device accesses through a first bit field.

In an embodiment, the system message is a master information block (MIB) message, and a system information block type 1 (SIB-1) configuration parameter in a first bit field of the MIB message is used for indicating the device type of the network device and/or the type of a repeater that the network device accesses.

In an embodiment, the system message is a system information block type 1 (SIB-1) message transmitted on a physical downlink shared channel (PDSCH) indicated by downlink control information (DCI) in a first physical downlink control channel (PDCCH), where the first PDCCH is a PDCCH scrambled by a system information radio network temporary identifier (SI-RNTI) specific for identifying the repeater that the network device accesses.

In an embodiment, transmitting the system message to the repeater includes:
transmitting a first system message to the repeater, where the first system message is used for indicating a device type of a network device; and
in case that the device type of the network device is the ncr-Support network device type, transmitting a second system message for identifying the repeater that the network device accesses to the repeater.

In an embodiment, the first system message is a MIB message common to a ncr-Support network device and a non-ncr-Support network device, the second system message is a SIB-1 message transmitted on the PDSCH indicated by DCI in a first PDCCH, and the first PDCCH is a PDCCH scrambled by a SI-RNTI specific for identifying the repeater that the network device accesses.

In an embodiment, the SCI message is carried by a first PDCCH, and the first PDCCH is a PDCCH scrambled by a SI-RNTI specific for identifying the repeater that the network device accesses.

In an embodiment, the SCI message indicates the device type of the network device and/or the type of the repeater that the network device accesses through a second bit field.

It should be noted here that the above-mentioned network device provided by the embodiments of the present application may implement all the method steps implemented by the above-mentioned method embodiments performed by the network device, and may achieve the same effect. The same parts and beneficial effects as the same method embodiments is not repeated in the present application.

FIG. 5 is a first schematic structural diagram of an apparatus for identifying a ncr-Support network device according to an embodiment of the present application. The apparatus includes:
a first obtaining unit 501, used for obtaining a system message transmitted from a network device, where the system message includes configuration information; or
a second obtaining unit 502, used for obtaining a sidelink control information (SCI) message transmitted from a network device, where the SCI message includes configuration information; or
a third obtaining unit 503, used for obtaining configuration information configured by operation administration and maintenance (OAM), where the configuration information includes identity information of a network device and/or frequency information,
where the configuration information is used for indicating a device type of the network device and/or a type of a repeater that the network device accesses, and the device type of the network device includes a ncr-Support network device type and a non-ncr-Support network device type.

In an embodiment, the system message indicates the device type of the network device and/or the type of the repeater that the network device accesses through a first bit field.

In an embodiment, the system message is a master information block (MIB) message, and a system information block type 1 (SIB-1) configuration parameter in a first bit field of the MIB message is used for indicating the device type of the network device and/or the type of a repeater that the network device accesses.

In an embodiment, the system message is a system information block type 1 (SIB-1) message transmitted on a physical downlink shared channel (PDSCH) indicated by downlink control information (DCI) in a first physical downlink control channel (PDCCH), where the first PDCCH is a PDCCH scrambled by a system information radio network temporary identifier (SI-RNTI) specific for identifying the repeater that the network device accesses.

In an embodiment, the first obtaining unit is further used for:
obtaining a first system message transmitted from the network device, where the first system message is used for indicating the device type of the network device; and
obtaining a second system message transmitted from the network device for identifying the repeater that the network device accesses in case that the device type of the network device is the ncr-Support network device type.

In an embodiment, the first system message is a MIB message common to a ncr-Support network device and a non-ncr-Support network device, the second system message is a SIB-1 message transmitted on the PDSCH indicated by DCI in a first PDCCH, and the first PDCCH is a PDCCH scrambled by a SI-RNTI specific for identifying the repeater that the network device accesses.

In an embodiment, the SCI message is carried by a first PDCCH, and the first PDCCH is a PDCCH scrambled by a SI-RNTI specific for identifying the repeater that the network device accesses.

In an embodiment, the SCI message indicates the device type of the network device and/or the type of the repeater that the network device accesses through a second bit field.

In an embodiment, the apparatus further includes a detecting unit, where the detecting unit is used for:
detecting a ncr-Support network device based on the configuration information; and
in case that multiple ncr-Support network devices are detected, accessing a ncr-Support network device satisfying a predetermined condition among the multiple ncr-Support network devices; or
in case that no ncr-Support network device is detected, obtaining configuration information on another frequency other than the frequency where the configuration information is located.

FIG. 6 is a second schematic structural diagram of an apparatus for identifying a ncr-Support network device according to an embodiment of the present application. The apparatus includes:
a first transmitting unit 601, used for transmitting a system message to a repeater, where the system message includes configuration information; or
a second transmitting unit 602, used for transmitting a sidelink control information (SCI) message to a repeater, where the SCI message includes configuration information,
where the configuration information is used for indicating a device type of the network device and/or a type of a repeater that the network device accesses, and the device type of the network device includes a ncr-Support network device type and a non-ncr-Support network device type.

In an embodiment, the system message indicates the device type of the network device and/or the type of the repeater that the network device accesses through a first bit field.

In an embodiment, the system message is a master information block (MIB) message, and a system information block type 1 (SIB-1) configuration parameter in a first bit field of the MIB message is used for indicating the device type of the network device and/or the type of a repeater that the network device accesses.

In an embodiment, the system message is a system information block type 1 (SIB-1) message transmitted on a physical downlink shared channel (PDSCH) indicated by downlink control information (DCI) in a first physical downlink control channel (PDCCH), where the first PDCCH is a PDCCH scrambled by a system information radio network temporary identifier (SI-RNTI) specific for identifying the repeater that the network device accesses.

In an embodiment, the first transmitting unit is specifically used for:
transmitting a first system message to the repeater, where the first system message is used for indicating a device type of a network device; and
in case that the device type of the network device is the ncr-Support network device type, transmitting a second system message for identifying the repeater that the network device accesses to the repeater.

In an embodiment, the first system message is a MIB message common to a ncr-Support network device and a non-ncr-Support network device, the second system message is a SIB-1 message transmitted on the PDSCH indicated by DCI in a first PDCCH, and the first PDCCH is a PDCCH scrambled by a SI-RNTI specific for identifying the repeater that the network device accesses.

In an embodiment, the SCI message is carried by a first PDCCH, and the first PDCCH is a PDCCH scrambled by a SI-RNTI specific for identifying the repeater that the network device accesses.

In an embodiment, the SCI message indicates the device type of the network device and/or the type of the repeater that the network device accesses through a second bit field.

The methods and the apparatuses provided by the embodiments of the present application are based on the same concept. The implementation of the apparatuses and the methods may be referred to each other since the principles of the methods and the apparatuses are similar, and the repetition will not be repeated.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer-readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that can store program codes such as U disk, mobile hard disk, read-only memory (ROM), random access memory (RAM), magnetic disk, or optical disk.

It should be noted here that the above-mentioned apparatus according to the embodiments of the present application can implement all the method steps implemented by the above-mentioned method embodiments, and can achieve the same effect. The same parts and beneficial effects as the same method embodiments will not be repeated here.

An embodiment of the present application further provides a processor-readable storage medium storing a computer program, where the computer program causes a processor to perform the methods for identifying the ncr-Support network device described above, which, for example, includes:
obtaining a system message transmitted from a network device, where the system message includes configuration information; or obtaining a sidelink control information (SCI) message transmitted from a network device, where the SCI message includes configuration information; or obtaining configuration information configured by operation administration and maintenance (OAM), where the configuration information includes identity information of a network device and/or frequency information,
where the configuration information is used for indicating a device type of the network device and/or a type of a repeater that the network device accesses, and the device type of the network device includes a ncr-Support network device type and a non-ncr-Support network device type.

Or, the method may include:
transmitting a system message to a repeater, where the system message includes configuration information; or
transmitting a sidelink control information (SCI) message to a repeater, where the SCI message includes configuration information,
where the configuration information is used for indicating a device type of the network device and/or a type of a repeater that the network device accesses, and the device type of the network device includes a ncr-Support network device type and a non-ncr-Support network device type.

The computer-readable storage medium can be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable a storage medium having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by computer-executable instructions. These computer-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for identifying a network-control repeater-Support, ncr-Support, network device, comprising:
obtaining a system message transmitted from a network device, wherein the system message comprises configuration information; or
obtaining a sidelink control information, SCI, message transmitted from a network device, wherein the SCI message comprises configuration information; or
obtaining configuration information configured by operation administration and maintenance, OAM, wherein the configuration information comprises identity information of a network device and/or frequency information,
wherein the configuration information is used for indicating a device type of the network device and/or a type of a repeater that the network device accesses and the device type of the network device comprises a ncr-Support network device type and a non-ncr-Support network device type.

2. The method of claim 1, wherein the system message indicates the device type of the network device and/or the type of the repeater that the network device accesses through a first bit field.

3. The method of claim 2, wherein the system message is a master information block, MIB, message, and a system information block type 1, SIB-1, configuration parameter in a first bit field of the MIB message is used for indicating the device type of the network device and/or the type of a repeater that the network device accesses.

4. The method of claim 1, wherein the system message is a system information block type 1, SIB-1, message transmitted on a physical downlink shared channel, PDSCH, indicated by downlink control information, DCI, in a first physical downlink control channel, PDCCH, wherein the first PDCCH is a PDCCH scrambled by a system information radio network temporary identifier, SI-RNTI, specific for identifying the repeater that the network device accesses.

5. The method of claim 1, wherein obtaining the system message transmitted from the network device comprises:
obtaining a first system message transmitted from the network device, wherein the first system message is used for indicating the device type of the network device; and
obtaining a second system message transmitted from the network device for identifying the repeater that the network device accesses in case that the device type of the network device is the ncr-Support network device type.

6. The method of claim 5, wherein the first system message is a master information block, MIB, message common to a ncr-Support network device and a non-ncr-Support network device, the second system message is a system information block type 1, SIB-1, message transmitted on a physical downlink shared channel, PDSCH, downlink control information, DCI, in a first physical downlink control channel, PDCCH, and the first PDCCH is a PDCCH scrambled by a system information radio network temporary identifier, SI-RNTI, specific for identifying the repeater that the network device accesses.

7. The method of claim 1, wherein the SCI message is carried by a first physical downlink control channel, PDCCH, and the first PDCCH is a PDCCH scrambled by a system information radio network temporary identifier, SI-RNTI, specific for identifying the repeater that the network device accesses.

8. The method of claim 7, wherein the SCI message indicates the device type of the network device and/or the type of the repeater that the network device accesses through a second bit field.

9. The method of any one of claims 1 to 8, further comprising:
detecting a ncr-Support network device based on the configuration information; and
in case that multiple ncr-Support network devices are detected, accessing a ncr-Support network device satisfying a predetermined condition among the multiple ncr-Support network devices; or
in case that no ncr-Support network device is detected, obtaining configuration information on another frequency other than the frequency where the configuration information is located.

10. A method for identifying a network-control repeater-Support, ncr-Support, network device, comprising:
transmitting a system message to a repeater, wherein the system message comprises configuration information; or
transmitting a sidelink control information, SCI, message to a repeater, wherein the SCI message comprises configuration information,
wherein the configuration information is used for indicating a device type of the network device and/or a type of a repeater that the network device accesses, and the device type of the network device comprises a ncr-Support network device type and a non-ncr-Support network device type.

11. The method of claim 10, wherein the system message indicates the device type of the network device and/or the type of the repeater that the network device accesses through a first bit field.

12. The method of claim 11, wherein the system message is a master information block, MIB, message, and a system information block type 1, SIB-1, configuration parameter in a first bit field of the MIB message is used for indicating the device type of the network device and/or the type of a repeater that the network device accesses.

13. The method of claim 10, wherein the system message is a system information block type 1, SIB-1, message transmitted on a physical downlink shared channel, PDSCH, indicated by downlink control information, DCI, in a first physical downlink control channel, PDCCH, and the first PDCCH is a PDCCH scrambled by a system information radio network temporary identifier, SI-RNTI, specific for identifying the repeater that the network device accesses.

14. The method of claim 10, wherein transmitting the system message to the repeater comprises:
transmitting a first system message to the repeater, wherein the first system message is used for indicating a device type of a network device; and
in case that the device type of the network device is the ncr-Support network device type, transmitting a second system message for identifying the repeater that the network device accesses to the repeater.

15. The method of claim 14, wherein the first system message is a master information block, MIB, message common to a ncr-Support network device and a non-ncr-Support network device, the second system message is a system information block type 1, SIB-1, message transmitted on a physical downlink shared channel, PDSCH, downlink control information, DCI, in a first physical downlink control channel, PDCCH, and the first PDCCH is a PDCCH scrambled by a system information radio network temporary identifier, SI-RNTI, specific for identifying the repeater that the network device accesses.

16. The method of claim 10, wherein the SCI message is carried by a first physical downlink control channel, PDCCH, and the first PDCCH is a PDCCH scrambled by a system information radio network temporary identifier, SI-RNTI, specific for identifying the repeater that the network device accesses.

17. The method of claim 16, wherein the SCI message indicates the device type of the network device and/or the type of the repeater that the network device accesses through a second bit field.

18. A repeater, comprising a memory, a transceiver and a processor,
wherein the memory is used for storing a computer program, the transceiver is used for transmitting and receiving data under control of the processor, and the processor is used for reading the computer program in the memory and performing the following operations:
obtaining a system message transmitted from a network device, wherein the system message comprises configuration information; or
obtaining a sidelink control information, SCI, message transmitted from a network device, wherein the SCI message comprises configuration information; or
obtaining configuration information configured by operation administration and maintenance, OAM, wherein the configuration information comprises identity information of a network device and/or frequency information,
wherein the configuration information is used for indicating a device type of the network device and/or a type of a repeater that the network device accesses, and the device type of the network device comprises a network-control repeater-Support, ncr-Support, network device type and a non-ncr-Support network device type.

19. The repeater of claim 18, wherein the system message indicates the device type of the network device and/or the type of the repeater that the network device accesses through a first bit field.

20. The repeater of claim 19, wherein the system message is a master information block, MIB, message, and a system information block type 1, SIB-1, configuration parameter in a first bit field of the MIB message is used for indicating the device type of the network device and/or the type of a repeater that the network device accesses.

21. The repeater of claim 18, wherein the system message is a system information block type 1, SIB-1, message transmitted on a physical downlink shared channel, PDSCH, indicated by downlink control information, DCI, in a first physical downlink control channel, PDCCH, wherein the first PDCCH is a PDCCH scrambled by a system information radio network temporary identifier, SI-RNTI, specific for identifying the repeater that the network device accesses.

22. The repeater of claim 18, wherein obtaining the system message transmitted from the network device comprises:
obtaining a first system message transmitted from the network device, wherein the first system message is used for indicating the device type of the network device; and
obtaining a second system message transmitted from the network device for identifying the repeater that the network device accesses in case that the device type of the network device is the ncr-Support network device type.

23. The repeater of claim 22, wherein the first system message is a master information block, MIB, message common to a ncr-Support network device and a non-ncr-Support network device, the second system message is a system information block type 1, SIB-1, message transmitted on a physical downlink shared channel, PDSCH, indicated by downlink control information, DCI, in a first physical downlink control channel, PDCCH, and the first PDCCH is a PDCCH scrambled by a system information radio network temporary identifier, SI-RNTI, specific for identifying the repeater that the network device accesses.

24. The repeater of claim 18, wherein the SCI message is carried by a first physical downlink control channel, PDCCH, and the first PDCCH is a PDCCH scrambled by a system information radio network temporary identifier, SI-RNTI, specific for identifying the repeater that the network device accesses.

25. The repeater of claim 24, wherein the SCI message indicates the device type of the network device and/or the type of the repeater that the network device accesses through a second bit field.

26. The repeater of any one of claims 18 to 25, wherein the operations further comprise:
detecting a ncr-Support network device based on the configuration information; and
in case that multiple ncr-Support network devices are detected, accessing a ncr-Support network device satisfying a predetermined condition among the multiple ncr-Support network devices; or
in case that no ncr-Support network device is detected, obtaining configuration information anon other frequency other than the frequency where the configuration information is located.

27. A network device, comprising a memory, a transceiver and a processor,
wherein the memory is used for storing a computer program, the transceiver is used for transmitting and receiving data under control of the processor, and the processor is used for reading the computer program in the memory and performing the following operations:
transmitting a system message to a repeater, wherein the system message comprises configuration information; or
transmitting a sidelink control information, SCI, message to a repeater, wherein the SCI message comprises configuration information,
wherein the configuration information is used for indicating a device type of the network device and/or a type of a repeater that the network device accesses, and the device type of the network device comprises a network-control repeater-Support, ncr-Support, network device type and a non-ncr-Support network device type.

28. The network device of claim 27, wherein the system message indicates the device type of the network device and/or the type of the repeater that the network device accesses through a first bit field.

29. The network device of claim 28, wherein the system message is a master information block, MIB, message, and a system information block type 1, SIB-1, configuration parameter in a first bit field of the MIB message is used for indicating the device type of the network device and/or the type of a repeater that the network device accesses.

30. The network device of claim 27, wherein the system message is a system information block type 1, SIB-1, message transmitted on a physical downlink shared channel, PDSCH, indicated by downlink control information, DCI, in a first physical downlink control channel, PDCCH, wherein the first PDCCH is a PDCCH scrambled by a system information radio network temporary identifier, SI-RNTI, specific for identifying the repeater that the network device accesses.

31. The network device of claim 27, wherein transmitting the system message to the repeater comprises:
transmitting a first system message to the repeater, wherein the first system message is used for indicating a device type of a network device; and
in case that the device type of the network device is the ncr-Support network device type, transmitting a second system message for identifying the repeater that the network device accesses to the repeater.

32. The network device of claim 31, wherein the first system message is a master information block, MIB, message common to a ncr-Support network device and a non-ncr-Support network device, the second system message is a system information block type 1, SIB-1, message transmitted on a physical downlink shared channel, PDSCH, indicated by downlink control information, DCI, in a first physical downlink control channel, PDCCH, and the first PDCCH is a PDCCH scrambled by a system information radio network temporary identifier, SI-RNTI, specific for identifying the repeater that the network device accesses.

33. The network device of claim 27, wherein the SCI message is carried by a first physical downlink control channel, PDCCH, and the first PDCCH is a PDCCH scrambled by a system information radio network temporary identifier, SI-RNTI, specific for identifying the repeater that the network device accesses.

34. The network device of claim 33, wherein the SCI message indicates the device type of the network device and/or the type of the repeater that the network device accesses through a second bit field.

35. An apparatus for identifying a network-control repeater-Support, ncr-Support, network device, comprising:
a first obtaining unit, used for obtaining a system message transmitted from a network device, wherein the system message comprises configuration information; or
a second obtaining unit, used for obtaining a sidelink control information, SCI, message transmitted from a network device, wherein the SCI message comprises configuration information; or
a third obtaining unit, used for obtaining configuration information configured by operation administration and maintenance, OAM, wherein the configuration information comprises identity information of a network device and/or frequency information,
wherein the configuration information is used for indicating a device type of the network device and/or a type of a repeater that the network device accesses, and the device type of the network device comprises a ncr-Support network device type and a non-ncr-Support network device type.

36. The apparatus of claim 35, wherein the system message indicates the device type of the network device and/or the type of the repeater that the network device accesses through a first bit field.

37. The apparatus of claim 36, wherein the system message is a master information block, MIB, message, and a system information block type 1, SIB-1, configuration parameter in a first bit field of the MIB message is used for indicating the device type of the network device and/or the type of a repeater that the network device accesses.

38. The apparatus of claim 35, wherein the system message is a system information block type 1, SIB-1, message transmitted on a physical downlink shared channel, PDSCH, indicated by downlink control information, DCI, in a first physical downlink control channel, PDCCH, wherein the first PDCCH is a PDCCH scrambled by a system information radio network temporary identifier, SI-RNTI, specific for identifying the repeater that the network device accesses.

39. The apparatus of claim 35, wherein the first obtaining unit is used for:
obtaining a first system message transmitted from the network device, wherein the first system message is used for indicating the device type of the network device; and
obtaining a second system message transmitted from the network device for identifying the repeater that the network device accesses in case that the device type of the network device is the ncr-Support network device type.

40. The apparatus of claim 39, wherein the first system message is a master information block, MIB, message common to a ncr-Support network device and a non-ncr-Support network device, the second system message is a system information block type 1, SIB-1, message transmitted on a physical downlink shared channel, PDSCH, downlink control information, DCI, in a first physical downlink control channel, PDCCH, and the first PDCCH is a PDCCH scrambled by a system information radio network temporary identifier, SI-RNTI, specific for identifying the repeater that the network device accesses.

41. The apparatus of claim 35, wherein the SCI message is carried by a first physical downlink control channel, PDCCH, and the first PDCCH is a PDCCH scrambled by a system information radio network temporary identifier, SI-RNTI, specific for identifying the repeater that the network device accesses.

42. The apparatus of claim 41, wherein the SCI message indicates the device type of the network device and/or the type of the repeater that the network device accesses through a second bit field.

43. The apparatus of any one of claims 35 to 42, further comprising a detecting unit, wherein the detecting unit is used for:
detecting a ncr-Support network device based on the configuration information; and
in case that multiple ncr-Support network devices are detected, accessing a ncr-Support network device satisfying a predetermined condition among the multiple ncr-Support network devices; or
in case that no ncr-Support network device is detected, obtaining configuration information on another frequency other than the frequency where the configuration information is located.

44. An apparatus for identifying a network-control repeater-Support, ncr-Support, network device, comprising:
a first transmitting unit, used for transmitting a system message to a repeater, wherein the system message comprises configuration information; or
a second transmitting unit, used for transmitting a sidelink control information, SCI, message to a repeater, wherein the SCI message comprises configuration information,
wherein the configuration information is used for indicating a device type of the network device and/or a type of a repeater that the network device accesses, and the device type of the network device comprises a ncr-Support network device type and a non-ncr-Support network device type.

45. The apparatus of claim 44, wherein the system message indicates the device type of the network device and/or the type of the repeater that the network device accesses through a first bit field.

46. The apparatus of claim 45, wherein the system message is a master information block, MIB, message, and a system information block type 1, SIB-1, configuration parameter in a first bit field of the MIB message is used for indicating the device type of the network device and/or the type of a repeater that the network device accesses.

47. The apparatus of claim 44, wherein the system message is a system information block type 1, SIB-1, message transmitted on a physical downlink shared channel, PDSCH, indicated by downlink control information, DCI, in a first physical downlink control channel, PDCCH, and the first PDCCH is a PDCCH scrambled by a system information radio network temporary identifier, SI-RNTI, specific for identifying the repeater that the network device accesses.

48. The apparatus of claim 44, wherein the first transmitting unit is used for:
transmitting a first system message to the repeater, wherein the first system message is used for indicating a device type of a network device; and
in case that the device type of the network device is the ncr-Support network device type, transmitting a second system message for identifying the repeater that the network device accesses to the repeater.

49. The apparatus of claim 48, wherein the first system message is a master information block, MIB, message common to a ncr-Support network device and a non-ncr-Support network device, the second system message is a system information block type 1, SIB-1, message transmitted on a physical downlink shared channel, PDSCH, downlink control information, DCI, in a first physical downlink control channel, PDCCH, and the first PDCCH is a PDCCH scrambled by a system information radio network temporary identifier, SI-RNTI, specific for identifying the repeater that the network device accesses.

50. The apparatus of claim 44, wherein the SCI message is carried by a first physical downlink control channel, PDCCH, and the first PDCCH is a PDCCH scrambled by a system information radio network temporary identifier, SI-RNTI, specific for identifying the repeater that the network device accesses.

51. The apparatus of claim 50, wherein the SCI message indicates the device type of the network device and/or the type of the repeater that the network device accesses through a second bit field.

52. A computer-readable storage medium storing a computer program, wherein the computer program is used for causing a computer to perform the method of any one of claims 1 to 9 or perform the method of any one of claims 10 to 17.
